# DEMANDE DE BREVET EUROPEEN

(11) **EP 2 682 322 A1**
(43) Date de publication de la demande: **08.01.2014**
(21) Numéro de dépôt: 13175425.1
(22) Date de dépôt: 05.07.2013
(51) Int. Cl.: B61L 15/00, B61L 27/00, G01M 17/10, G01M 13/04

(54) **Diagnostic de l'état structurel d'unités de roulement d'un engin, incluant des moyens de calcul et d'analyse embarqués sur l'engin**

(30) Priorité: 06.07.2012 FR 1256563
(71) Demandeur: NTN-SNR Roulements, 74000 Annecy (FR)
(72) Inventeur: Desbiolles, Pascal, 74570 Thorens Glieres (FR); Guerre-Chaley, Frédéric, 74230 Dingy Saint Clair (FR); Faugeras, Gilles, 73630 Le Chatelard (FR)
(74) Mandataire: Derambure Conseil

(57) **Abrégé**

Le système de diagnostic de l'état structurel d'une pluralité d'unités de roulement ayant une donnée d'identification implantées sur un engin à roues, comprend, embarqués sur l'engin des appareils de mesure et de collecte de la valeur d'un paramètre des conditions de roulage des unités de roulement caractéristique de leur état structurel, associés aux unités de roulement, des moyens de calcul et d'analyse (36), aptes à être associés fonctionnellement aux appareils de mesure et de collecte (20) sans la nécessité de moyens de liaison filaire de grande longueur, aptes à fournir une information de diagnostic de l'état structurel présent ou prévisionnel de chacune des unités de roulement (12) implantées sur l'engin (16), des moyens de stockage de données (24) aptes à être associés fonctionnellement aux moyens de calcul et d'analyse (36) sans la nécessité de moyens de liaison filaire de grande longueur, des moyens de communication de données (26) par liaison sans fil dans une certaine zone de couverture associés fonctionnellement aux moyens de stockage de données (24) sans la nécessité de moyens de liaison filaire de grande longueur, et, dissociée structurellement de l'engin (16), au moins une unité de recueil de données (30), apte à être positionnée structurellement par rapport à une voie (18) dans la zone de couverture des moyens de communication (26) embarqués sur l'engin (16) se trouvant sur cette voie (18) et à recueillir ainsi ladite information de diagnostic et les données d'identification stockées.

## Description

L'invention concerne, de façon générale, le domaine technique du diagnostic de l'état structurel d'unités de roulements implantées sur des engins à roues, dans le cas où il est prévu des moyens de calcul et d'analyse embarqués sur l'engin.

Elle a plus spécialement pour objet, selon un premier aspect, un système de diagnostic de l'état structurel d'une pluralité d'unités de roulement implantées sur un engin à roues tel qu'un train ou engin mobile et/ou automobile. Elle a également pour objet, selon un deuxième aspect, un engin à roues comprenant plusieurs essieux et plusieurs unités de roulement pour son déplacement sur un réseau de voies, apte à faire partie d'un système de diagnostic selon le premier aspect. Elle a également pour objet, selon un troisième aspect, un procédé de mise en oeuvre d'un système de diagnostic selon le premier aspect.

Dans le contexte de l'invention, l'on entend par « unité de roulement », un ensemble constituant un roulement ou incluant un roulement et comprenant typiquement, au moins, une bague externe et une bague interne, les deux bagues étant coaxiales et espacées radialement, et une pluralité de corps roulants interposés entre les deux bagues et coopérant avec des chemins de roulement ménagés sur celles-ci, moyennant généralement une cage de roulement.

Dans le contexte de l'invention, une telle unité de roulements est implantée sur un engin à roues, d'une part étant portée par la structure portante de l'engin (châssis), d'autre part, portant l'arbre rotatif de roue.

Dans le contexte de l'invention, un tel engin à roues est typiquement un train, mais, plus généralement, peut être un engin mobile et/ou automobile tel qu'un chariot de transport ou de manutention ou un camion, cette liste n'étant pas limitative. De façon typique, un tel engin à roues comporte une pluralité d'unités de roulement, plusieurs essieux, le cas échéant pour un train plusieurs boggies.

Un tel engin à roues est amené à se déplacer ou à être déplacé sur une voie d'un réseau de voies. Lors d'un tel déplacement, les unités de roulement sont en fonctionnement rotatif.

Dans le contexte de l'invention, l'on entend par « voie » un espace apte au déplacement de l'engin à roues, notamment un espace aménagé pour permettre ou faciliter le déplacement. Ainsi, une voie peut être constituée de rails, dans le cas d'un train, d'une piste dans le cas d'un chariot, d'une chaussée dans le cas d'un camion. En général, il y a plusieurs voies agencées de sorte à former un réseau.

Dans le contexte de l'invention, l'on entend par état « structurel » d'une unité de roulement, l'état de l'unité de roulement eu égard à une caractéristique propre de celle-ci ayant un effet sur ses conditions de roulement. De façon typique, l'état structurel est la présence ou l'importance d'une altération de l'état de surface des chemins de roulement, de la bague, ou des corps roulants eux-mêmes, tel qu'un écaillage, ou une détérioration plus ou moins importante de la cage du roulement, qui peut avoir pour effet une irrégularité de la rotation, voire son blocage et *in fine* une destruction plus ou moins importante de l'unité de roulement. L'initiation d'une telle altération de l'unité de roulement est peu décelable voire invisible à l'oeil, outre d'ailleurs qu'elle peut être masquée à la vue par des organes de l'unité de roulement ou de l'engin sur lequel il est implanté. Une telle altération de l'unité de roulement peut apparaître pour nombre de raisons, et de façon impromptue. Elle peut se dégrader de façon plus ou moins rapide. Et, elle peut perturber le bon fonctionnement de l'unité de roulement, et donc de l'engin, voire mettre en cause la sécurité.

Dans le contexte de l'invention, l'on entend par « diagnostic » de l'état structurel d'une unité de roulement, la conclusion tirée sur la nature ou le degré de cet état structurel, comparativement soit à l'état structurel théorique parfait, notamment d'origine, de l'unité de roulement soit à un état structurel considéré comme significatif, et notamment problématique ou plus ou moins critique, au regard d'un fonctionnement normal ou de la sécurité ou de la maintenance ou de la nécessité de remplacer ou de prévoir de remplacer l'unité de roulement par une unité de roulement neuve ou du moins ayant un état structurel convenable.

Dans le contexte de l'invention, l'on distingue le diagnostic de l'état structurel présent et le diagnostic de l'état structurel prévisionnel. L'état structurel présent se réfère à celui, réel, qui est contemporain du diagnostic ou bien de la (ou des) mesure(s) qui le permet(tent). L'état structurel prévisionnel se réfère à celui, prospectif, qui peut être déduit d'une (ou de) mesure(s) et d'une loi d'évolution donnée de l'état structurel en fonction de la rotation de l'unité de roulement.

Ainsi, dans le contexte de l'invention et dans une application typique, l'on vise à tirer une conclusion sur la nature ou le degré de l'état structurel, prévisionnel, de chacune des unités de roulement de l'engin à roues, au regard de la normalité du fonctionnement ou de la sécurité ou de la maintenance ou du remplacement.

Le document FR 2 944 875 décrit un procédé de détection d'un défaut structurel d'un ensemble mécanique comprenant un organe tournant tel qu'une unité de roulement. Selon ce procédé, on mesure la vitesse instantanée de rotation et on traite la vitesse ainsi mesurée de sorte à déduire l'apparition d'un défaut (c'est-à-dire une modification) de l'état structurel de l'unité de roulement.

L'on connaît des systèmes visant à connaître l'état structurel des unités de roulement implantées sur un train apte au déplacement sur un réseau de voies. Certains systèmes comprennent, embarqués sur le train, des appareils de mesure et de collecte dans le temps de la valeur d'un paramètre des conditions de roulage des unités de roulement caractéristique de leur état structurel. Plus particulièrement, ces appareils de mesure et de collecte sont associés structurellement et fonctionnellement aux unités de roulement et aptes à mesurer et collecter les valeurs du paramètre pour fournir des données caractéristiques des conditions de roulage des unités de roulement. Ces systèmes comprennent aussi des moyens de stockage de données aptes à stocker lesdites données caractéristiques des conditions de roulage ainsi que des données d'identification des unités de roulement.

Selon une réalisation, les données d'identification des unités de roulement et les données caractéristiques fournies par les appareils de mesure et de collecte sont utilisées *a posteriori* pour déterminer l'état structurel des unités de roulement. Une telle réalisation présente toutefois l'inconvénient de ne pas offrir un suivi suffisamment régulier et, donc, fiable de l'état structurel des unités de roulement. Dès lors, l'on est conduit, par exemple, à coupler le système à des capteurs de température positionnés sur ou à proximité immédiate des voies et permettant d'identifier très rapidement l'apparition d'un échauffement critique et caractéristique d'une condition de roulage inhabituelle et dangereuse. Mais, d'une part, cette solution engendre des surcoûts du fait de l'utilisation de capteurs de température supplémentaires. Et, d'autre part, l'identification d'une telle condition de roulage inhabituelle et dangereuse intervient souvent tardivement et oblige donc à immobiliser le train sur une voie du réseau, ce qui génère d'importants retards sur l'ensemble du réseau.

Selon une autre réalisation envisagée, l'ensemble des appareils de mesure et de collecte de données permettant de fournir les données caractéristiques des conditions de roulage et l'ensemble des moyens de stockage de ces données caractéristiques des conditions de roulage sont installées, en première monte, sur le train. Selon cette réalisation, les appareils de mesure et de collecte de données sont alors reliés, par le biais de liaisons filaires intégrées au train, à une unité de recueil de données et à des moyens de calcul et d'analyse également embarqués sur le train. Les moyens de calcul et d'analyse permettent ainsi de calculer, à partir des données caractéristiques recueillies, une information sur l'état structurel des unités de roulement qui peut, le cas échéant, être envoyés à l'extérieur du train. Cette réalisation présente toutefois également plusieurs inconvénients. Elle oblige, en effet, que soient intégrées directement au train les liaisons filaires permettant de communiquer les données caractéristiques à l'unité de recueil de données. Cela implique, donc, d'importants efforts d'intégration des câblages dans le train, ce qui peut s'avérer problématique en termes de coûts, de poids et d'encombrement, surtout lorsque le système de diagnostic n'est pas intégré au train en première monte mais résulte au contraire d'une installation postérieure, sur un train préexistant. Par conséquent, le déploiement d'une telle solution sur un parc de trains préexistants ayant quelque importance, est quasiment impossible à des conditions économiques raisonnables.

Le document US 2007/0208841 porte sur un réseau auto-organisateur de faible puissance comprenant une pluralité de noeuds de communication sans fil communiquant sans fil avec l'autre. Les noeuds ont chacune un capteur fournissant une valeur de données de capteur respectif indicatif d'un paramètre physique dans l'environnement de ce noeud. Le réseau interrompt la communication sans fil avec des noeuds dans laquelle la valeur de données de capteur est en dehors d'une plage de valeurs de données de capteurs du réseau. Le réseau est de préférence un groupe de véhicules se déplaçant en même temps, en particulier un train, dans lequel chaque noeud est associé à une roue respective d'une voiture de chemin de fer. Les noeuds sont des appareils de faible puissance qui communiquent en utilisant les communications sans fil selon un protocole Zigbee. Les noeuds ont chacun un capteur supplémentaire de détection d'un paramètre physique. On détermine un degré de dégradation d'un roulement de la roue et on transmet les données du degré de dégradation au noeud principal. Le noeud principal communique avec un autre système d'ordinateur utilisant un système de communication d'une puissance plus élevée et transmet à celui-ci des données indicatives de la dégradation desdits roulements.

Ainsi, il existe le besoin de disposer d'un système de diagnostic de l'état structurel d'une pluralité d'unités de roulement implantées sur un engin à roues qui soit exempt de l'une au moins des limitations précédemment évoquées.

Plus particulièrement, il existe le besoin de disposer d'un système de diagnostic, non seulement de l'état présent mais également de l'état prévisionnel, avec des moyens de calcul et d'analyse embarqués sur l'engin, qui soit, d'une part, simple et économique à installer sur un parc d'engins préexistant et qui soit, d'autre part, peu consommateur et/ou autonome en énergie électrique.

A cet effet, selon un premier aspect, l'invention a pour objet un système de diagnostic de l'état structurel d'une pluralité d'unités de roulement distantes les unes des autres, chacune ayant une donnée d'identification propre, implantées sur un engin à roues, ayant le cas échéant plusieurs essieux ou boggies, pour son déplacement sur un réseau de voies, en particulier un train, qui comprend, embarqués sur l'engin:
■ une pluralité d'appareils de mesure et de collecte dans le temps de la valeur d'au moins un paramètre des conditions de roulage des unités de roulement caractéristique de leur état structurel, associés structurellement et fonctionnellement à la pluralité d'unités de roulement, aptes à mesurer et collecter les valeurs dudit paramètre et à fournir des données caractéristiques des conditions de roulage de chacune des unités de roulement, moyennant, le cas échéant, des moyens de traitement associés fonctionnellement,
■ des moyens de stockage de données,
■ et des moyens d'alimentation électrique embarqués sur l'engin.

Le système de diagnostic comprend en outre:
■ une pluralité de moyens de calcul et d'analyse, embarqués sur l'engin, décentralisés et distants les uns des autres, aptes à être associés fonctionnellement à la pluralité d'appareils de mesure et de collecte par des liaisons sans fil ou par des liaisons filaires ayant chacune une longueur inférieure à la moitié, plus particulièrement inférieure au tiers, plus particulièrement encore inférieure au quart, de la distance la plus grande séparant deux unités de roulement, en particulier inférieure à 2 mètres, aptes, à partir desdites données caractéristiques et d'au moins une valeur significative prédéterminée du - ou fonction du - paramètre caractéristique, à fournir des informations de diagnostic de l'état structurel présent ou prévisionnel des unités de roulement,
■ une pluralité de moyens de stockage de données, décentralisés et distants les uns des autres, aptes à être associés fonctionnellement à la pluralité de moyens de calcul et d'analyse par des liaisons sans fil ou par des liaisons filaires ayant chacune une longueur inférieure à la moitié, plus particulièrement inférieure au tiers, plus particulièrement encore inférieure au quart, de la distance la plus grande séparant deux unités de roulement, en particulier inférieure à 2 mètres, et aptes à stocker les informations de diagnostic fournies par la pluralité de moyens de calcul et d'analyse et les données d'identification de la pluralité d'unités de roulement,
■ une pluralité de moyens de communication de données par liaison sans fil dans une certaine zone de couverture, embarqués sur l'engin, décentralisés et distants les uns des autres, aptes à être associés fonctionnellement à la pluralité de moyens de stockage de données par des liaisons sans fil ou par des liaisons filaires ayant chacune une longueur inférieure à la moitié, plus particulièrement inférieure au tiers, plus particulièrement encore inférieure au quart, de la distance la plus grande séparant deux unités de roulement, en particulier inférieure à 2 mètres aptes à transférer les informations de diagnostic et les données d'identification stockées,
■ au moins une unité de recueil de données, dissociée structurellement de l'engin, apte à être positionnée structurellement par rapport à une voie dans la zone de couverture des moyens de communication embarqués sur l'engin se trouvant sur cette voie et à recueillir ainsi les informations de diagnostic et les données d'identification stockées.

Selon les réalisations, le système de diagnostic comprend des moyens de communication de données par liaison sans fil à courte distance inférieure à environ 100 mètres, plus particulièrement inférieure à environ 20 mètres, et/ou à moyenne distance comprise entre environ 100 mètres et environ 500 mètres, et/ou à longue distance comprise entre environ 500 mètres et quelques kilomètres.

Selon les réalisations, les appareils de mesure et de collecte, et/ou les moyens de calcul et d'analyse, et/ou les moyens de stockage de données, et/ou les moyens de communication et/ou les moyens d'alimentation électrique sont propres à chaque unité de roulement de la pluralité d'unités de roulement ou propres à chaque essieu ou propres à chaque boggie.

Selon une réalisation, le système de diagnostic comporte une pluralité de moyens d'alimentation électrique, décentralisés et distants les uns des autres, autonomes, aptes à être associés fonctionnellement aux appareils de mesure et de collecte, aux moyens de calcul et d'analyse, aux moyens de stockage de données, aux moyens de communication de données, par des liaisons ayant chacune une longueur inférieure à la moitié, plus particulièrement inférieure au tiers, plus particulièrement encore inférieure au quart, de la distance la plus grande séparant deux unités de roulement, en particulier inférieure à 2 mètres.

Selon les réalisations, les moyens d'alimentation électrique soit sont propres aux appareils de mesure et de collecte, aux moyens de calcul et d'analyse, aux moyens de stockage de données, aux moyens de communication de données et autonomes comme des batteries électriques ou moyennant des moyens de récupération d'énergie soit sont au moins pour partie communs à plusieurs appareils de mesure et de collecte, aux moyens de calcul et d'analyse, aux moyens de stockage de données, aux moyens de communication de données soit sont au moins pour partie communs aux moyens d'alimentation électrique de l'engin.

Selon les réalisations, les appareils de mesure et de collecte, et/ou les moyens de calcul et d'analyse, et/ou les moyens de stockage de données, et/ou les moyens de communication et/ou les moyens d'alimentation électrique sont au moins pour partie localisés vers les unités de roulement, les essieux ou les boggies, et en particulier sont localisés vers la périphérie de l'engin, et en particulier au moins pour partie placés dans un boîtier propre, fixé à l'engin, en particulier de façon amovible ou rapporté.

Selon les réalisations, une unité de recueil de données soit est fixe soit est déplaçable, en particulier transportable, plus spécialement portable en tout ou partie tel qu'une partie portative de mesure et une partie formant console d'accueil.

Selon les réalisations, en position de recueil, une unité de recueil est disposée le long d'une voie du réseau, d'un côté ou des deux côtés de ladite voie, en particulier en vis-à-vis, ou dans la région où plusieurs voies du réseau sont structurellement proches les unes des autres.

Selon les réalisations, le système de diagnostic soit comprend une unique unité de recueil pour la totalité du réseau de voies soit comprend une pluralité d'unités de recueil, en particulier une pluralité d'unités de recueil réparties par rapport au réseau de voies, et plus spécialement réparties au moins grosso modo régulièrement.

Selon les réalisations, une unité de recueil est associée à une voie où en situation normale l'engin soit roule soit est à l'arrêt, le diagnostic étant effectué, respectivement, pour un engin roulant ou un engin à l'arrêt.

Selon les réalisations, il est prévu pour une unité de roulement soit un unique appareil de mesure et de collecte soit au moins deux appareils de mesure et de collecte montés en parallèle, en particulier un appareil de mesure et de collecte de haute résolution et un appareil de mesure et de collecte de basse consommation électrique, en particulier de basse résolution.

Selon les réalisations, le système de diagnostic comprend des moyens de stockage de données actifs pendant une période de temps qui soit correspond à la période de temps entre deux recueils successifs de donnés par une unité de recueil soit correspond à une durée préfixée fixée par l'opérateur mettant en oeuvre le système de diagnostic, les moyens de stockage étant vidés des données préalablement stockées à l'issue de la période de temps.

Selon une réalisation, le système de diagnostic comprend également des moyens de stockage permanent de données.

Selon une réalisation, le système de diagnostic comprend en outre des moyens de contrôle et d'information de l'état de charge électrique des moyens d'alimentation électrique, embarqué sur l'engin.

Selon une réalisation, le système de diagnostic comprend en outre au moins une mémoire de stockage desdites informations de diagnostic embarquée sur l'engin et/ou dissociée structurellement - et pouvant être le cas échéant distante - du réseau de voies et de l'engin.

Selon les réalisations, les moyens de calcul et d'analyse sont programmés de manière, à partir des données caractéristiques des conditions de roulage des unités de roulement, à mettre en oeuvre tout ou partie d'un procédé de détection d'une anomalie structurelle des unités de roulement, et/ou à mettre en oeuvre un procédé de prédiction qu'une unité de roulement devrait atteindre un seuil significatif de l'état structurel considéré après une certaine rotation, selon une loi d'évolution du paramètre des conditions de roulage de l'unité de roulement en fonction de la rotation de celle-ci.

Selon une réalisation, le système de diagnostic comporte, en outre, des moyens d'expression visuelle et/ou sonore embarqués sur l'engin, associés fonctionnellement aux moyens de calcul et d'analyse et aptes à recevoir d'eux une information de diagnostic de l'état structurel présent ou prévisionnel de chacune des unités de roulement, en particulier une information de diagnostic critique.

Selon une réalisation, l'état structurel présent ou prévisionnel diagnostiqué est une altération de l'unité de roulement, tel qu'un écaillage ou analogue, en particulier la présence ou non d'une telle altération, et/ou le degré d'importance d'une telle altération, ou une altération de la cage du roulement.

Selon une réalisation, le paramètre des conditions de roulage d'une unité de roulement caractéristique de son état structurel est la vitesse instantanée de rotation de l'unité de roulement, les appareils de mesure et de collecte étant des capteurs de vitesse de rotation instantanée aptes à mesurer la vitesse de rotation instantanée d'une unité de roulement.

Selon un deuxième aspect, l'invention a pour objet un engin à roues ayant une pluralité d'unités de roulement pour son déplacement sur un réseau de voies et, le cas échéant, plusieurs essieux ou boggies, tel qu'un engin tracté, en particulier un train, ou un engin mobile ou automobile, avec des unités de roulements décentralisées et distantes, sur lequel est embarqué et monté un sous-système spécialement destiné à faire partie d'un système de diagnostic, en étant embarqué et monté sur l'engin à roues de sorte à être associé à une unité de roulement ou à un essieu ou à un boggie, qui comprend un appareil de mesure et de collecte et, le cas échéant, un moyen de traitement, un moyen de calcul et d'analyse, un moyen de stockage de données, un moyen de communication de données par liaison sans fil dans une certaine zone de couverture, un moyen d'alimentation électrique des moyens du sous-système, et entre les moyens du sous-système, des liaisons non filaires ou des liaisons filaires ayant chacune une longueur inférieure à la moitié, plus particulièrement inférieure au tiers, plus particulièrement encore inférieure au quart, de la distance la plus grande séparant deux unités de roulement, en particulier inférieure à 2 mètres, dans lequel les appareils de mesure et de collecte, les moyens de calcul et d'analyse, les moyens de stockage de données et les moyens de communication de données sont décentralisés et distants les uns des autres, alors que les liaisons non filaires ou les liaisons filaires ont chacune une longueur inférieure à la moitié, plus particulièrement inférieure au tiers, plus particulièrement encore inférieure au quart, de la distance la plus grande séparant deux unités de roulement, en particulier inférieure à 2 mètres, alors que, le cas échéant, les appareils de mesure et de collecte avec les moyens de traitement, les moyens de stockage de données, les moyens de calcul et d'analyse, les moyens de communication de données, les moyens d'alimentation électrique des moyens du sous-système, et les liaisons non filaires ou filaires soit sont intégrés à l'engin en première monte soit sont montés sur l'engin postérieurement à sa réalisation.

Selon un troisième aspect, l'invention a pour objet un procédé de mise en oeuvre du système de diagnostic précédemment décrit, dans lequel :
■ moyennant la mise en oeuvre des appareils de mesure et de collecte et le cas échéant des moyens de traitement, on mesure et on collecte dans le temps la valeur d'au moins un paramètre des conditions de roulage des unités de roulement, caractéristique de leur état structurel et on fournit des données caractéristiques des conditions de roulage de chacune des unités de roulement,
■ moyennant la mise en oeuvre des moyens de calcul et d'analyse, à partir desdites données caractéristiques et d'au moins une valeur significative prédéterminée du - ou fonction du - paramètre caractéristique, on fournit une information de diagnostic de l'état structurel présent ou prévisionnel de chacune des unités de roulement implantées sur l'engin,
■ moyennant la mise en oeuvre des moyens de stockage de données, on stocke lesdites informations de diagnostic et les données d'identification,
■ moyennant la mise en oeuvre des moyens de communication de données et de l'unité de recueil, on transfère lesdites informations de diagnostic et les données d'identification stockées à l'unité de recueil de données, alors que l'unité de recueil est positionnée structurellement dans la zone de couverture des moyens de communication.

Selon les réalisations, on associe l'unité de recueil à une voie où en situation normale l'engin soit roule soit est à l'arrêt, et on effectue le diagnostic, respectivement, pour un engin roulant ou un engin à l'arrêt.

On décrit maintenant brièvement les figures des dessins.

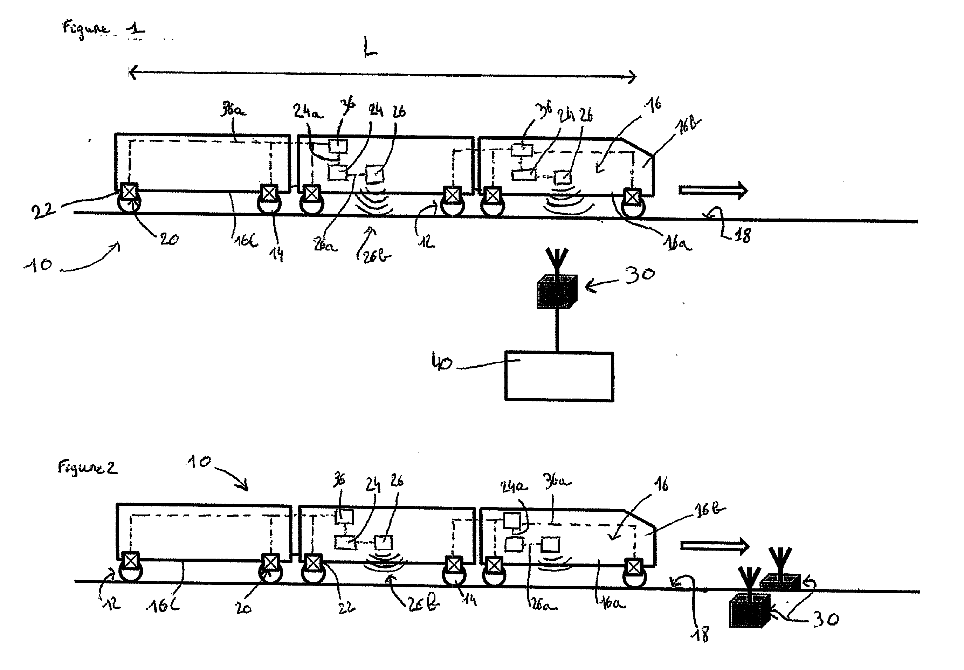

La figure 1 est une vue générale, en représentation symbolique, d'un système de diagnostic selon l'invention permettant de diagnostiquer l'état structurel d'une pluralité d'unités de roulement implantées sur un engin à roues, en l'espèce un train, se déplaçant sur un réseau de voies, dans lequel des moyens de communication de données transmettent, par liaison sans fil, les informations de diagnostic à une unité de recueil de données disposée le long d'une voie du réseau, d'un côté de ladite voie et dans la zone de couverture des moyens de communication.
La figure 2 est une vue générale symbolique du système de diagnostic analogue à la figure 1, dans lequel il est prévu deux unités de recueil disposées le long d'une voie du réseau, des deux côtés de ladite voie en vis-à-vis.

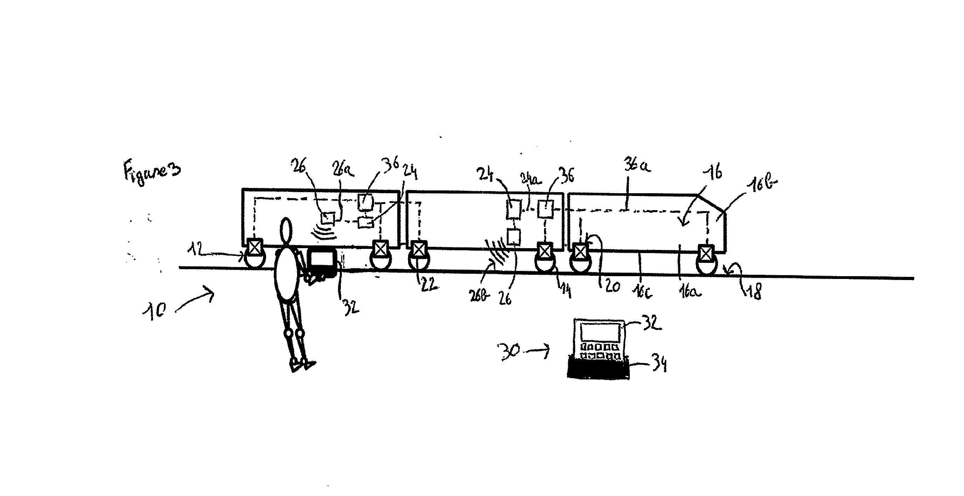

La figure 3 une vue générale symbolique du système de diagnostic analogue aux figures précédentes, dans lequel l'unité de recueil de données présente une partie portative déplaçable et transportable et une partie formant console d'accueil recevant les informations de diagnostic de la partie formant console.

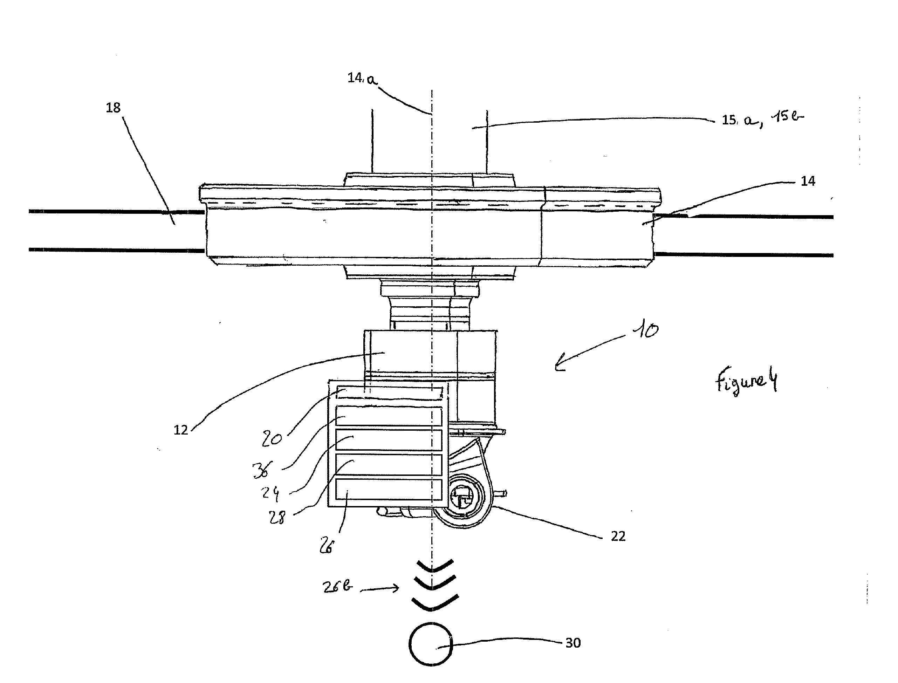

La figure 4 est une vue schématique symbolique illustrant une partie du châssis d'un véhicule, une roue, son essieu, le rail correspondant, une unité de roulement de la roue en question, l'appareil de mesure et de collecte associé, les moyens de calcul et d'analyse, les moyens de stockage de données, les moyens d'alimentation électrique et les moyens de communication de données associés, dans un boitier, et une unité de recueil de données.

On décrit maintenant en détail plusieurs modes de réalisation de l'invention au moyen des exemples expliqués à l'aide des dessins et en utilisant les signes de référence qui figurent dans les dessins.

L'invention concerne un système de diagnostic 10 visant à diagnostiquer l'état structurel d'une pluralité d'unités de roulement 12 associés aux roues 14, d'axes 14a, d'un ou plusieurs engins 16 capables de déplacement sur un réseau de voies 18, ces unités de roulement 12 étant ainsi implantées sur l'engin 16, comme les roues 14.

Les unités de roulement 12 sont décentralisées et distantes les unes des autres.

Dans le contexte de l'invention, par « décentralisé et distant » appliqué à certains moyens l'on entend que ces moyens ne sont pas localisés en un emplacement unique de l'engin, mais en une pluralité d'emplacements répartis dans l'engin, tout spécialement le long de celui-ci, depuis l'avant jusque l'arrière.

Par « système », l'on entend un ensemble de moyens associés les uns aux autres de façon organisée, structurelle et/ou fonctionnelle, pour viser un but commun et assurer un même objectif.

Par association « structurelle » de moyens, l'on entend que ces moyens sont associés physiquement entre eux, par exemple solidarisés l'un à l'autre ou solidarisés chacun à un autre moyen.

Par association « fonctionnelle » de moyens, l'on entend que ces moyens fonctionnent l'un avec l'autre, notamment l'un dépendant de l'autre, par exemple parce que l'un fournit en sortie une donnée qui commande le fonctionnement de l'autre.

Ici, le but est la normalité du fonctionnement, la sécurité, la maintenance, le remplacement des unités de roulement 12. Et l'objectif est de diagnostiquer de l'état structurel de ces unités de roulement 12.

Les termes et expressions « diagnostic », « état structurel », « unité de roulement », « engin », « voie » doivent être compris et interprétés comme il a été indiqué au début du texte.

De façon typique, l'état structurel que l'on cherche à diagnostiquer est une altération de l'unité de roulement, comme il a été précédemment défini et exposé.

Par ailleurs, selon une réalisation, l'engin 16 comporte plusieurs essieux 15a supportant, chacun, une ou plusieurs unités de roulement 12. L'engin 16 peut, en outre, comporter des boggies 15b sur lesquels sont alors fixés les essieux 15a.

Selon les réalisations illustrées sur les figures, l'engin 16 supportant les différentes unités de roulement 12 est un train. Mais il pourrait également s'agir de tout autre type de véhicule, motorisé ou non, capable de déplacement sur un réseau de voies 18 déterminé et utilisant une pluralité d'unités de roulement 12. À titre exemplatif et nullement limitatif, les engins 16 peuvent ainsi correspondre à des chariots de convoyage tels que ceux qui sont utilisés dans le domaine industriel ou bien à des formes diverses d'engins automobiles ou bien encore à tout autre type d'engin analogue.

Un engin 16 tel que celui concerné par l'invention comporte une pluralité, qui peut être élevée, d'unités de roulement 12 décentralisées et distantes les unes des autres. On désigne par L, comme illustré sur la figure 1, la distance la plus grande séparant deux unités de roulement 12, typiquement celle se trouvant le plus à l'avant de l'engin 16 et celle se trouvant le plus à l'arrière.

Afin d'assurer le diagnostic individualisé de l'état structurel des unités de roulement 12, chacune de ces unités de roulement 12 est pourvue d'une donnée d'identification propre permettant en l'identifiant de façon unique, de la différencier des autres. Ainsi, à chaque donnée d'identification correspond une seule et unique unité de roulement 12, ce qui permet d'assurer de façon collective un diagnostic visant les unités de roulement de façon individuelle sans risque de confusion.

Le système de diagnostic 10 comporte également, embarqué sur l'engin 16 à roues 14, des appareils de mesure et de collecte 20 dans le temps de la valeur d'un paramètre des conditions de roulage des unités de roulement 12 ou de plusieurs paramètres. Dans la suite du texte, lorsqu'il est question « du » paramètre, il faut comprendre l'au moins un paramètre considéré. Un tel appareil de mesure et de collecte peut former une seule entité propre groupée ou bien peut comporter plusieurs parties associées fonctionnellement entre elles mais pouvant être plus ou moins disjointes structurellement, l'expression « appareil de mesure et de collecte » visant les deux situations.

Les appareils de mesure et de collecte 20 sont associés structurellement et fonctionnellement aux unités de roulement 12 et ils mesurent et collectent les différentes valeurs, dans le temps, du paramètre des conditions de roulage susceptibles - après analyse - de caractériser l'état structurel, présent ou prévisionnel, des unités de roulement 12.

Les appareils de mesure et de collecte 20 sont capables de fournir, à partir de plusieurs valeurs dans le temps, du paramètre des conditions de roulage, des données caractéristiques des conditions de roulage de chacune des unités de roulement. Les données caractéristiques des conditions de roulage sont soit les valeurs du paramètre des conditions de roulage soit calculées à partir des valeurs du paramètre des conditions de roulage, moyennant des moyens de traitement associés fonctionnellement aux appareils de mesure et de collecte 20, et le cas échéant associés structurellement à eux. Par conséquent, l'expression « appareil de mesure et de collecte » inclut le cas échéant les moyens de traitement dont il vient d'être question.

Dans le cas où l'état structurel que l'on cherche à diagnostiquer est une altération tel qu'un écaillage ou analogue, le paramètre qui peut être pris en compte est la vitesse instantanée de rotation de l'unité de roulement, comme il est décrit dans le document FR 2 944 875. Les moyens de traitement dont il vient d'être question peuvent alors assurer la mise en oeuvre du procédé décrit dans le document FR 2 944 875.

Dans ce cas, et selon une réalisation non exclusive, un appareil de mesure et de collecte 20 inclut un capteur de vitesse instantanée de rotation capable de mesurer la vitesse instantanée de rotation de la partie mobile d'une unité de roulement 12. Selon une variante, le capteur mesure la vitesse instantanée de plusieurs unités de roulement 12, typiquement sur un même essieu 15a, par exemple la mesure directe de la vitesse instantanée de la première unité de roulement 12 de l'essieu 15a et la mesure indirecte de la vitesse instantanée de la seconde unité de roulement 12 de l'essieu 15a. Les capteurs de vitesse de rotation peuvent prendre différentes formes de réalisation ou d'implantation sans sortir du cadre de l'invention. Dans toutes ces variantes, le paramètre des conditions de roulage mesuré et collecté par les appareils de mesure et de collecte 20 correspond à la vitesse de rotation instantanée.

Cette réalisation n'est pas exclusive et les appareils de mesure et de collecte 20 peuvent inclure des capteurs autres que des capteurs de vitesse, par exemple des capteurs de température, des capteurs de couple, des accéléromètres ou analogues. Dans ces réalisations, les paramètres sont la température, le couple, l'accélération, etc. De tels appareils de mesure et de collecte 20 avec de tels capteurs adaptés à de tels paramètres conviennent et sont inclus dans le cadre de l'invention, dès lors que le paramètre mesuré est susceptible de caractériser- après analyse - l'état structurel présent ou prévisionnel des unités de roulement.

Par ailleurs, les appareils de mesure et de collecte 20 peuvent également être capables de mesurer et collecter, simultanément ou successivement, les valeurs de plusieurs paramètres des conditions de roulage pour fournir lesdites données caractéristiques des conditions de roulage.

Un appareil de mesure et de collecte 20 présente généralement au moins une partie substantielle placée dans un boîtier 22 propre.

Le boîtier 22 peut ainsi être fixé à l'engin 16 par tout moyen de fixation approprié. En particulier ce moyen de fixation peut être amovible ou rapporté de manière à permettre l'entretien et le remplacement des appareils de mesure et de collecte 20.

Selon une forme de réalisation, le système de diagnostic 10 comprend une pluralité d'appareils de mesure et de collecte 20 agencés de sorte qu'un appareil de mesure et de collecte 20 est prévu propre à chacune desdites unités de roulement 12. Chaque appareil de mesure et de collecte 20 est alors associé à une unité de roulement 12, en étant placé à proximité d'elle, pour recueillir les valeurs du paramètre des conditions de roulage et fournir les données caractéristiques des conditions de roulage correspondantes. Chaque boîtier 22 est alors propre à une unique unité de roulement 12.

Selon une autre forme de réalisation, le système de diagnostic 10 comprend une pluralité d'appareils de mesure et de collecte 20 agencés de sorte qu'au moins un appareil de mesure et de collecte 20 est prévu pour partie commun à plusieurs unités de roulement 12. Dans ce cas, le système de diagnostic 10 peut prévoir l'utilisation de liaisons sans fil ou de liaisons filaires permettant de rassembler les données caractéristiques des conditions de roulage au sein d'un même appareil de mesure et de collecte 20.

En particulier, il est possible de prévoir l'utilisation d'un appareil de mesure et de collecte 20 au moins pour partie commun à deux unités de roulement 12 distinctes et reliées structurellement l'une et l'autre à un même essieu 15a. Dans ce cas, chaque boîtier 22 appartenant à un appareil de mesure et de collecte 20 est commun aux deux unités de roulement 12 fixées sur le même essieu 15a.

De manière similaire, il est envisageable d'utiliser au moins un appareil de mesure et de collecte 20 au moins pour partie commun à quatre unités de roulement 12 distinctes mais reliées structurellement à un même boggie 15b appartenant à l'engin 16. Dans ce cas, chaque boîtier 22 appartenant à un appareil de mesure et de collecte 20 est commun aux quatre unités de roulement 12 fixées sur le même boggie 15b.

Dans une réalisation possible, il est prévu, pour une unité de roulement 12, un unique appareil de mesure et de collecte 20. Mais, à des fins de contrôle ou de sécurité notamment, il peut être prévu, pour une unité de roulement 12, au moins deux appareils de mesure et de collecte 20, ou à tout le moins deux parties d'appareils. Ces appareils de mesure et de collecte 20 peuvent être montés en parallèle. Par exemple, dans une réalisation possible, il est prévu un appareil de mesure et de collecte 20 de haute résolution et un appareil de mesure et de collecte 20 de basse consommation électrique en particulier de basse résolution. Cet agencement est particulièrement bien adapté au cas où les moyens d'alimentation électrique des appareils de mesure et de collecte 20, sur lesquels on reviendra par la suite, sont autres que les moyens d'alimentation électrique de l'engin, étant propres à chaque appareil de mesure et de collecte 20 ou communs à plusieurs appareils de mesure et de collecte 20.

Les appareils de mesure et de collecte 20 embarqués sur l'engin 16 sont décentralisés et distants les uns des autres. Ils sont aptes à être associés fonctionnellement aux unités de roulement 12 directement ou par les liaisons sans fil ou filaires précédemment mentionnées.

Lorsqu'il est prévu de telles liaisons sans fil ou filaires, celles-ci ont chacune une longueur restreinte, à savoir une longueur inférieure à la moitié de la distance la plus grande séparant deux unités de roulement 12. Par exemple, ces liaisons ont chacune une longueur inférieure au tiers, et plus particulièrement encore inférieure au quart, de la distance la plus grande séparant deux unités de roulement 12. Plus spécialement, ces liaisons ont chacune une longueur restreinte inférieure à 2 mètres.

Le système de diagnostic 10 selon l'invention comprend aussi des moyens de calcul et d'analyse 36, embarqués sur l'engin 16.

Ces moyens de calcul et d'analyse 36 sont destinés et aptes à recevoir les données caractéristiques des conditions de roulage et les données d'identification des unités de roulement 12 provenant des appareils de mesure et de collecte 20, via des liaisons 36a, liaisons sans fil ou liaisons filaires.

À partir des données caractéristiques des conditions de roulage et des données d'identification, d'une part, ainsi que d'au moins une valeur significative prédéterminée du - ou fonction du - paramètre caractéristique, d'autre part, les moyens de calcul et d'analyse 36 sont aptes à fournir une information de diagnostic de l'état structurel ou prévisionnel de chacune des unités de roulement 12 implantés sur l'engin 16, cette information étant reçue par des moyens de stockage de données 24, ici les informations de diagnostic, via des liaisons 24a.

Pour ce faire, et dans le cas d'un diagnostic de l'état structurel présent, les moyens de calcul et d'analyse 36 sont programmés de manière à mettre en oeuvre, dans une réalisation possible, tout ou partie du procédé de détection d'un défaut structurel tel qu'il résulte de l'enseignement du document FR2 944 875.

Dans le cas d'un diagnostic prévisionnel, les moyens de calcul et d'analyse 36 sont programmés de manière à mettre en oeuvre un procédé de prédiction qu'une unité de roulement 12 devrait atteindre un seuil significatif de l'état structurel considéré après une certaine rotation. Un tel procédé repose sur une loi d'évolution du paramètre des conditions de roulage de l'unité de roulement 12 en fonction de la rotation de celle-ci - en particulier le cumul du nombre de tours ou de la durée de rotation -.

Selon une réalisation, le système de diagnostic 10 comprend une pluralité de moyens de calcul et d'analyse 36 prévus propres à chaque appareil de mesure et de collecte 20. Chacun des moyens de calcul et d'analyse 36 est alors capable de traiter les données caractéristiques des conditions de roulage provenant l'appareil de mesure et de collecte 20 correspondant. En revanche, ledit moyen de calcul et d'analyse 36 n'est pas destiné à traiter les données caractéristiques des conditions de roulage provenant d'autres appareils de mesure et de collecte 20. Dans ce cas, les moyens de calcul et d'analyse 36 peuvent être au moins partiellement associés structurellement aux boîtiers 22 recevant l'appareil de mesure et de collecte 20 correspondant.

Selon une autre réalisation, le système de diagnostic peut comprendre une pluralité de moyens de calcul et d'analyse 36 prévus communs à plusieurs appareils de mesure et de collecte 20. Les moyens de calcul et d'analyse 36 sont alors partagés entre plusieurs appareils de mesure et de collecte 20, moyennant l'utilisation de liaisons sans fil ou de liaisons filaires 36a. Comme précédemment, lesdits moyens de calcul et d'analyse 36 peuvent ainsi être communs à plusieurs appareils de mesure et de collecte 20 d'un même essieu 15a ou bien d'un même boggie 15b.

Dans tous les cas, les moyens de calcul et d'analyse 36 embarqués sur l'engin 16 sont décentralisés et distants les uns des autres. Ils sont aptes à être associés fonctionnellement à la pluralité d'appareils de mesure et de collecte 20 par les liaisons sans fil ou par des liaisons filaires 36a.

Ces liaisons sans fil ou filaires 36a ont chacune une longueur restreinte, à savoir une longueur inférieure à la moitié de la distance la plus grande séparant deux unités de roulement 12. Par exemple, ces liaisons 36a ont chacune une longueur inférieure au tiers, et plus particulièrement encore inférieure au quart, de la distance la plus grande séparant deux unités de roulement 12. Plus spécialement, ces liaisons 36a ont chacune une longueur restreinte inférieure à 2 mètres.

Le système de diagnostic 10 comporte également, des moyens de stockage de données 24 embarqués sur l'engin 16.

Ces moyens de stockage de données 24 sont en communication par des liaisons sans fil ou filaires 24a avec les moyens de calcul et d'analyse 36 et permettent de stocker, d'une part, les informations de diagnostic et, d'autre part, les données d'identifications associées aux unités de roulement 12.

De cette manière, chacune des informations de diagnostic fournies par les moyens de calcul et d'analyse 36 est stockée en association avec les données d'identification de l'unité de roulement 12 correspondante.

Selon une réalisation, le système de diagnostic 10 comprend une pluralité de moyens de stockage de données 24 prévus propres à chaque moyen de calcul et d'analyse 36. Chacun des moyens de stockage de données 24 est alors capable de stocker l'information de diagnostic provenant du moyen de calcul et d'analyse 36 correspondant. En revanche, ledit moyen de stockage de données 24 n'est pas destiné à stocker les informations de diagnostic provenant d'autres moyens de calcul et d'analyse 36. Dans ce cas, les moyens de stockage de données 24 peuvent être au moins partiellement associés structurellement aux boîtiers 22 recevant l'appareil de mesure et de collecte 20 et possiblement les moyens de calcul et d'analyse 36.

Selon une autre réalisation, le système de diagnostic peut comprendre des moyens de stockage 24 communs à plusieurs moyens de calcul et d'analyse 36. Les moyens de stockage de données 24 sont alors partagés entre plusieurs moyens de calcul et d'analyse 36, moyennant l'utilisation de liaisons sans fil ou de liaisons filaires 24a. Comme précédemment, lesdits moyens de stockage de données 24 peuvent ainsi être communs à plusieurs moyens de calcul et d'analyse 36 d'un même essieu 15a ou bien d'un même boggie 15b.

Selon une réalisation, les moyens de stockage de données 24 stockent les informations de diagnostic pendant une période de temps qui correspondant à la période de temps entre deux recueils successifs de données par une unité de recueil 30 (décrite ci-après).

À l'inverse, selon une réalisation alternative, les moyens de stockage 24 peuvent stocker les informations de diagnostic pendant une période de temps correspondant à une durée préfixée, déterminée par l'opérateur mettant en oeuvre le système de diagnostic 10. Les moyens de stockage 24 sont alors vidés des données préalablement stockées à l'issue de la période de temps prédéterminée.

Dans une réalisation possible, le système de diagnostic 10 comprend également des moyens de stockage permanent de données, embarqués sur le véhicule 16, aptes à stocker toutes les données caractéristiques des conditions de roulage et/ou les informations de diagnostic ou certaines d'entre elles, pour des raisons de sécurité, afin de pouvoir effectuer des constats, contrôles ou analyses *a posteriori.*

A l'instar des moyens de calcul et d'analyse 36, dans tous les cas, les moyens de stockage 24 embarqués sur l'engin 16 sont décentralisés et distants les uns des autres. Ils sont aptes à être associés fonctionnellement à la pluralité des moyens de calcul et d'analyse 36 par les liaisons sans fil ou par des liaisons filaires 24a.

Ces liaisons sans fil ou filaires 24a ont chacune une longueur restreinte, à savoir une longueur inférieure à la moitié de la distance la plus grande séparant deux unités de roulement 12. Par exemple, ces liaisons 24a ont chacune une longueur inférieure au tiers, et plus particulièrement encore inférieure au quart, de la distance la plus grande séparant deux unités de roulement 12. Plus spécialement, ces liaisons 24a ont chacune une longueur restreinte inférieure à 2 mètres. Cette disposition constructive permet d'éviter la présence sur l'engin 16 de liaisons de grande longueur avec les inconvénients inhérents.

Dans la réalisation qui vient d'être décrite, les moyens de calcul et de diagnostic 36 sont associés aux appareils de mesure et de collecte 20. Mais, bien entendu, il peut être prévu entre eux des moyens de stockage des données.

Le système de diagnostic 10 comporte aussi, embarqué sur l'engin 16, des moyens de communication de données 26 par liaison sans fil, ce qui doit être compris comme comprenant des moyens matériels structurels et un protocole de communication.

Ces moyens de communication de données 26 sont destinés et aptes à émettre des données, par liaison sans fil, dans une certaine zone de couverture 26b. Plus particulièrement, les moyens de communication de données 26 sont associés fonctionnellement aux moyens de stockage de données 24 via des liaisons 26a, liaisons sans fil ou liaisons filaires, de manière à recevoir de ces derniers les informations de diagnostic et les données d'identification des unités de roulement 12 et à permettre le transfert par liaison sans fil et dans la zone de couverture, de ces informations de diagnostic et de ces données d'identification des unités de roulement 12.

À titre exemplatif et nullement limitatif, les moyens de communication de données 26 peuvent émettre ces données par liaison sans fil à courte distance, notamment dans une zone de couverture 26b présentant un rayon inférieur à environ 100 mètres, en particulier inférieur à environ 20 mètres.

De façon additionnelle ou alternative, il est possible de prévoir que les moyens de communication de données 26 émettent ces données par liaison sans fil à moyenne distance, notamment dans une zone de couverture 26b comprise entre environ 100 mètres et environ 500 mètres.

Il est en outre possible de prévoir de façon additionnelle ou alternative que les moyens de communication de données 26 émettent ces données par liaison sans fil à longue distance, notamment dans une zone de couverture 26b comprise entre environ 500 mètres et quelques kilomètres.

Selon une réalisation, les moyens de communication de données 26 sont au moins pour partie localisés vers la périphérie 16c de l'engin 16, et en particulier adjacents ou proches de la périphérie 16c de l'engin 16. De cette manière, les obstacles entre les moyens de communication de données 26 et l'extérieur de l'engin 16 sont réduits et les risques de défaillance lors de la communication sans fil sont limités.

Selon une autre réalisation, les moyens de communication de données 26 peuvent être localisés vers la partie transversale médiane 16d de l'engin 16. Ce peut être le cas notamment lorsqu'ils sont utilisés pour transmettre les informations de diagnostic et les données d'identification des unités de roulement provenant de plusieurs appareils de mesure et de collecte 20 différents et structurellement séparés.

Selon une réalisation, le système de diagnostic 10 comprend une pluralité de moyens de communication de données 26 prévus propres à chaque unité de roulement 12. Dans ce cas, les moyens de communication de données 26 peuvent être, au moins partiellement, associés structurellement aux boîtiers 22 recevant l'appareil de mesure et de collecte 20 et possiblement les moyens de calcul et d'analyse 36 et les moyens de stockage de données 24 correspondants.

Selon une autre réalisation, le système de diagnostic 10 comprend des moyens de communication de données 26 communs pour plusieurs unités de roulement 12, moyennant l'utilisation de liaisons sans fil ou de liaisons filaires 26a. Les moyens de communication de données 26 peuvent alors être communs à plusieurs unités de roulement 12 d'un même ensemble.

A l'instar des moyens de calcul et d'analyse 36 et des moyens de stockage 24, dans tous les cas, les moyens de communication de données 26 embarqués sur l'engin 16 sont décentralisés et distants les uns des autres. Ils sont aptes à être associés fonctionnellement à la pluralité des moyens de stockage 24 par les liaisons sans fil ou par des liaisons filaires 26a.

Ces liaisons sans fil ou filaires 26a ont chacune une longueur restreinte, à savoir une longueur inférieure à la moitié de la distance la plus grande séparant deux unités de roulement 12. Par exemple, ces liaisons 26a ont chacune une longueur inférieure au tiers, et plus particulièrement encore inférieure au quart, de la distance la plus grande séparant deux unités de roulement 12. Plus spécialement, ces liaisons 26a ont chacune une longueur restreinte inférieure à 2 mètres. Cette disposition constructive permet d'éviter la présence sur l'engin 16 de liaisons de grande longueur avec les inconvénients inhérents.

La disposition constructive des liaisons 36a, 24a et 26a, sans fil ou filaires, en ce qui concerne leur longueur restreinte, permet d'éviter la présence sur l'engin 16 de liaisons de grande longueur avec les inconvénients inhérents. Cette disposition constructive est particulièrement adaptée au cas où les moyens constitutifs du système de diagnostic embarqués sur l'engin 16 (formant ensemble un sous-système, sont montés sur l'engin 16 postérieurement à sa réalisation, l'engin 16 n'étant pas pourvu d'origine de telles liaisons.

Le système de diagnostic 10 selon l'invention comprend également, embarqué sur l'engin 16, des moyens d'alimentation électrique 28.

Ces moyens d'alimentation électrique 28 sont destinés à assurer l'alimentation en énergie électrique des appareils de mesure et de collecte de données 20, des moyens de calcul et d'analyse 36, des moyens de stockage de données 24, des moyens de communication de données 26, etc.

Selon une réalisation, les moyens d'alimentation électrique 28 peuvent être propres aux appareils de mesure et de collecte de données 20, et/ou aux moyens de calcul et d'analyse 36, et/ou aux moyens de stockage de données 24, et/ou aux moyens de communication de données 26 dédiés à une unité de roulement 12. De cette manière, les moyens d'alimentation électrique 28 peuvent, eux-aussi, être regroupés dans un même boîtier 22 ce qui limite les besoins en câblage additionnel.

Toutefois, les moyens d'alimentation électrique 28 peuvent également, selon une autre réalisation, être communs à plusieurs appareils de mesure et de collecte de données 20, et/ou moyens de calcul et d'analyse 36, et/ou moyens de stockage de données 24, et/ou moyens de communication de données 26. Ils peuvent également être pour partie communs avec l'alimentation électrique de l'engin 16, moyennant un câblage de distribution approprié.

Dans le cas moyens d'alimentation électrique 28 autres que ceux de l'engin 16 et propres à chaque appareil de mesure et de collecte 20 ou communs à plusieurs appareils de mesure et de collecte 20 et/ou autres moyens 36, 24, 26, ces moyens d'alimentation électrique 28 peuvent être autonomes comme des batteries électriques ou comprendre ou être associés à des moyens de récupération d'énergie connus ou à la portée de l'homme du métier, tels que ceux mis en oeuvre par suite des mouvements de l'engin.

Les moyens d'alimentation électrique 28 sont décentralisés et distants les uns des autres. Ils sont aptes à être associés aux moyens qu'ils alimentent par les liaisons qui, comme les liaisons 36a, 24a et 26a ont chacune une longueur inférieure au tiers, et plus particulièrement encore inférieure au quart, de la distance la plus grande séparant deux unités de roulement 12. Plus spécialement, ces liaisons ont chacune une longueur restreinte inférieure à 2 mètres.

Dans une réalisation possible visant à pouvoir surveiller l'alimentation électrique, pour des raisons de sécurité, et alors que les moyens d'alimentation électrique 28 sont autres que ceux de l'engin et étant autonomes et propres à chaque appareil de mesure et de collecte 20 ou communs à plusieurs appareils de mesure et de collecte 20, il peut être prévu des moyens de contrôle et d'information de l'état de charge électrique des moyens d'alimentation électrique 28. Ces moyens de contrôle et d'information sont aptes à contrôler l'état de charge électrique des moyens d'alimentation 28, tel que, notamment, l'atteinte d'au moins un seuil inférieur de sécurité. Ils sont aptes, également, à fournir une information sur l'état de charge électrique des moyens d'alimentation électrique 28.

On a représenté sur la figure 4 une configuration possible dans laquelle le châssis 16a du véhicule 16 porte la pluralité d'unités de roulement 12, dont une seule est ici représentée, sur laquelle est monté à son tour l'essieu 15a, sur lequel sont montées à leur tour deux roues 14 d'axe 14a, dont une seule est ici représentée, chaque roue étant montée sur un rail 18. Solidaire du carter de l'unité de roulement 12 ou de la partie du châssis 16a dont il est adjacent, est le boîtier 22 qui comprend tout ou partie de l'appareil de mesure et de collecte 20, des moyens de calcul et d'analyse 36, des moyens de stockage de données 24, des moyens de communication de données 24, ici vers la périphérie 16c de l'engin 16, et des moyens d'alimentation électrique 28 éventuellement (s'ils sont propres et ce pour une alimentation autonome). Comme il résulte de la description qui précède, cette configuration n'est pas limitative.

Ainsi, des modules formant tout ou partie de l'appareil de mesure et de collecte 20, des moyens de calcul et d'analyse, des moyens de stockage de données 24, des moyens de communication de données 24 et des moyens d'alimentation électrique 28, peuvent être propres à chaque unité de roulement 12, et donc chaque roue 14, ou propres à un essieu 15a d'au moins une couple de roues 14 ou propres à un boggie 15b d'au moins une couple d'essieux 15b. Il est possible bien entendu de combiner ces différentes réalisations entre elles.

Avec les réalisations telles que celles décrites, pour une unité de roulement 12 donnée (et ce pour chacune des unités de roulement 12 de la pluralité d'unités de roulement 12 l'engin 16), la mesure du paramètre, sa collecte, son traitement, le calcul et l'analyse qui le concerne, le stockage des informations de diagnostic et des données d'identification, la communication de celles-ci, et l'alimentation électrique, grâce aux moyens 20, 36, 24, 26, 28 décentralisés et distants les uns des autres, déjà décrits, se font au plus près de l'unité de roulement 12 considérée, en évitant des liaisons de grande longueur tout le long de l'engin 16.

Le système de diagnostic 10 comprend également au moins une unité de recueil de données 30. Il faut comprendre par-là que selon les réalisations, le système de diagnostic comporte une seule unité de recueil de données 30 ou bien qu'il en comporte plusieurs. Dans la suite du texte, lorsqu'il est question de la « une » unité de recueil de données, paramètre, il faut comprendre de la au moins une unité de recueil 30.

Selon l'invention, l'unité de recueil de données 30 est dissociée structurellement de l'engin 16 et apte à être positionnée structurellement par rapport à une voie du réseau de voies 18, dans la zone de couverture 26b des moyens de communications de données 26 embarqués sur l'engin 16.

De cette manière, l'unité de recueil de données 30 est apte à recueillir les informations de diagnostic et les données d'identifications transmises par les moyens de communication 26.

L'unité de recueil de données 30 peut recouvrir différentes formes de réalisation.

Selon une forme de réalisation représentée par les figures 1 et 2, le système de diagnostic 10 peut comprendre une unité de recueil de données 30 qui soit fixe et disposée d'un côté ou de l'autre, le long de la voie appartenant au réseau de voies 18. Alternativement, le système de diagnostic 10 pourrait également comprendre une pluralité d'unités de recueil de données 30 qui soient fixes, disposées d'un côté ou de l'autre d'une ou plusieurs voies et réparties au moins grosso modo régulièrement par rapport au réseau de voies 18.

Chacun des moyens de communication de données 26 associé à une unité de roulement 12 est alors capable de transmettre, à la volée, les informations de diagnostic et les données d'identification des unités de roulement 12 en direction de l'unité de recueil de données 30, lorsque ladite unité de recueil 30 entre dans la zone de couverture 26b desdits moyens de communication de données 26.

Selon une forme de réalisation représentée par la figure 2, le système de diagnostic 10 peut également comprendre deux - ou plus - unités de recueil de données 30 qui soient fixes et disposées de part et d'autre de la voie appartenant au réseau de voies 18. Comme précédemment, le système de diagnostic 10 peut d'ailleurs prévoir de disposer plusieurs couples d'unité de recueil de données 30 le long d'une ou plusieurs voies et réparties au moins grosso modo régulièrement par rapport audit réseau de voies 18.

De la même manière que précédemment, chacun des moyens de communication de données 26 associé à une unité de roulement 12 est alors capable de transmettre, à la volée, les informations de diagnostic et les données d'identification de chaque unité de roulement 12 en direction de l'une et/ou l'autre des unités de recueil de données 30, lorsque ces dernières entrent dans la zone de couverture 26b des moyens de communication de données 26.

Selon une autre forme de réalisation représentée par la figure 3, le système de diagnostic 10 comprend au moins une unité de recueil de données 30 déplaçable et, en particulier, transportable. Plus particulièrement, ladite unité de recueil de données 30 peut alors comprendre une partie portative 32 de mesure pouvant être aisément déplacée et positionnée dans la zone de couverture 26b des moyens de communication de données 26. Là encore, le système de diagnostic 10 peut prévoir l'utilisation de plusieurs unités de recueil de données 30, en particulier de plusieurs parties portatives 32 de mesure.

Ainsi, un ou plusieurs opérateurs peuvent se charger alternativement ou successivement de recueillir, à la volée ou lorsque l'engin 16 est à l'arrêt, les informations de diagnostic et les données d'identification de chacune des unités de roulement 12.

Dans ce cas de figure, l'unité de recueil de données 30 peut également comprendre une console d'accueil 34 apte à recevoir la partie portative 32 permettant de télécharger et éventuellement de traiter les informations de diagnostic et les données d'identification recueillies par la partie portative 32 de l'unité de recueil 30.

Dans les différentes formes de réalisation, la ou les unité(s) de recueil 30 peuvent être associées à une voie où en situation normale l'engin 16 soit roule soit est à l'arrêt, le diagnostic étant alors effectué, respectivement, pour un engin 16 roulant ou un engin 16 à l'arrêt.

D'autre part, selon une réalisation, les moyens de calcul et d'analyse 36 peuvent également contenir des moyens de communication de diagnostic capables de transmettre les informations de diagnostic à un moyen d'information embarqué sur l'engin 16. Une telle réalisation permet, en effet, de prévenir le conducteur de l'engin 16 ou bien les opérateurs positionnés à proximité de l'engin 16 qu'un défaut a été détecté sur l'une ou l'autre des unités de roulement 12.

Le système de diagnostic 10 peut également comporter des moyens d'expression visuelle et/ou sonore embarqués sur l'engin 16 qui sont aptes à recevoir et à fournir une information de diagnostic de l'état structurel présent ou prévisionnel de chacune des unités de roulement, et en particulier une information de diagnostic critique.

Le système de diagnostic 10 peut également comporter une mémoire de stockage 40 des informations de diagnostic recueillies par l'unité de recueil de données 30. Une telle mémoire de stockage 40 peut être dissociée structurellement du réseau de voies et de l'engin 16 - et pouvant être le cas échéant distante - du réseau de voies 18 et de l'engin 16. Dans une autre réalisation, alternative ou cumulative, la mémoire de stockage 40 des informations de diagnostic est embarquée sur l'engin 16.

L'invention a enfin pour objet le procédé de mise en oeuvre du système de diagnostic 10 précédemment décrit.

Ce procédé s'infère du système 10 lui-même.

Ce procédé est tel que, moyennant tout d'abord la mise en oeuvre des appareils de mesure et de collecte 20, l'on mesure dans le temps la valeur d'au moins un paramètre des conditions de roulage des unités de roulement 12, caractéristique de leur état structurel et on fournit des données caractéristiques des conditions de roulage de chacune des unités de roulement 12. Le cas échéant, on traite les donnes moyennant les moyens de traitement.

Moyennant la mise en oeuvre des moyens de calcul et d'analyse 36, on fournit l'information de diagnostic de l'état structurel présent ou prévisionnel de chacune des unités de roulement 12 implantées sur l'engin à roues 16, à partir paramètre des conditions de roulage des unités de roulement 12.

Moyennant la mise en oeuvre des moyens de stockage de données 24, l'on stocke lesdites informations de diagnostic et les données d'identification.

Moyennant la mise en oeuvre des moyens de communication de données 26 et de l'unité de recueil 30, l'on transfère lesdites informations de diagnostic et les données d'identification stockées à l'unité de recueil de données 30, alors que l'unité de recueil est positionnée structurellement dans la zone de couverture des moyens de communication de données 26.

Comme il a été déjà indiqué, l'on associe l'unité de recueil 30 à une voie 18 où en situation normale l'engin 16 roule ou bien alors que l'engin 16 est à l'arrêt. Ainsi, l'on effectue le diagnostic, respectivement, pour un engin 16 roulant ou un engin 16 à l'arrêt.

## Revendications

1. Système de diagnostic (10) de l'état structurel d'une pluralité d'unités de roulement (12) distantes les unes des autres, chacune ayant une donnée d'identification propre, implantées sur un engin à roues (16), ayant le cas échéant plusieurs essieux (15a) ou boggies (15b), pour son déplacement sur un réseau de voies (18), en particulier un train, qui comprend, embarqués sur l'engin (16):
■ une pluralité d'appareils de mesure et de collecte (20) dans le temps de la valeur d'au moins un paramètre des conditions de roulage des unités de roulement (12) caractéristique de leur état structurel, associés structurellement et fonctionnellement à la pluralité d'unités de roulement (12), aptes à mesurer et collecter les valeurs dudit paramètre et à fournir des données caractéristiques des conditions de roulage de chacune des unités de roulement (12), moyennant, le cas échéant, des moyens de traitement associés fonctionnellement,
■ des moyens de stockage de données (24),
■ et des moyens d'alimentation électrique (28) des moyens du système de diagnostic embarqués sur l'engin (16),
**caractérisé en ce qu'il** comprend en outre:
■ une pluralité de moyens de calcul et d'analyse (36), embarqués sur l'engin (16), décentralisés et distants les uns des autres, aptes à être associés fonctionnellement à la pluralité d'appareils de mesure et de collecte (20) par des liaisons sans fil ou par des liaisons filaires (36a) ayant chacune une longueur inférieure à la moitié, plus particulièrement inférieure au tiers, plus particulièrement encore inférieure au quart, de la distance la plus grande séparant deux unités de roulement (12), en particulier inférieure à 2 mètres, aptes, à partir desdites données caractéristiques et d'au moins une valeur significative prédéterminée du - ou fonction du - paramètre caractéristique, à fournir des informations de diagnostic de l'état structurel présent ou prévisionnel des unités de roulement (12),
■ une pluralité de moyens de stockage de données (24), décentralisés et distants les uns des autres, aptes à être associés fonctionnellement à la pluralité de moyens de calcul et d'analyse (36) par des liaisons sans fil ou par des liaisons filaires (24a) ayant chacune une longueur inférieure à la moitié, plus particulièrement inférieure au tiers, plus particulièrement encore inférieure au quart, de la distance la plus grande séparant deux unités de roulement (12), en particulier inférieure à 2 mètres, et aptes à stocker les informations de diagnostic fournies par la pluralité de moyens de calcul et d'analyse (36) et les données d'identification de la pluralité d'unités de roulement (12),
■ une pluralité de moyens de communication de données (26) par liaison sans fil dans une certaine zone de couverture, embarqués sur l'engin (16), décentralisés et distants les uns des autres, aptes à être associés fonctionnellement à la pluralité de moyens de stockage de données (24) par des liaisons sans fil ou par des liaisons filaires (26a) ayant chacune une longueur inférieure à la moitié, plus particulièrement inférieure au tiers, plus particulièrement encore inférieure au quart, de la distance la plus grande séparant deux unités de roulement (12), en particulier inférieure à 2 mètres aptes à transférer les informations de diagnostic et les données d'identification stockées,
■ au moins une unité de recueil de données (30), dissociée structurellement de l'engin (16), apte à être positionnée structurellement par rapport à une voie (18) dans la zone de couverture des moyens de communication (26) embarqués sur l'engin (16) se trouvant sur cette voie (18) et à recueillir ainsi les informations de diagnostic et les données d'identification stockées.

2. Système de diagnostic (10) selon la revendication 1, comprenant des moyens de communication de données (26) par liaison sans fil à courte distance inférieure à environ 100 mètres, plus particulièrement inférieure à environ 20 mètres, et/ou à moyenne distance comprise entre environ 100 mètres et environ 500 mètres, et/ou à longue distance comprise entre environ 500 mètres et quelques kilomètres.

3. Système de diagnostic (10) selon l'une quelconque des revendications 1 et 2, dans lequel les appareils de mesure et de collecte (20), et/ou les moyens de calcul et d'analyse (36), et/ou les moyens de stockage de données (24), et/ou les moyens de communication (26) et/ou les moyens d'alimentation électrique (28) sont propres à chaque unité de roulement (12) de la pluralité d'unités de roulement (12) ou propres à chaque essieu (15a) ou propres à chaque boggie (15b).

4. Système de diagnostic (10) selon l'une quelconque des revendications 1 à 3, qui comporte une pluralité de moyens d'alimentation électrique (28), décentralisés et distants les uns des autres, autonomes, aptes à être associés fonctionnellement aux appareils de mesure et de collecte (20), aux moyens de calcul et d'analyse (36), aux moyens de stockage de données (24), aux moyens de communication de données (26), par des liaisons (28a) ayant chacune une longueur inférieure à la moitié, plus particulièrement inférieure au tiers, plus particulièrement encore inférieure au quart, de la distance la plus grande séparant deux unités de roulement (12), en particulier inférieure à 2 mètres.

5. Système de diagnostic (10) selon l'une quelconque des revendications 1 à 4, dans lequel les moyens d'alimentation électrique (28) soit sont propres aux appareils de mesure et de collecte (20), aux moyens de calcul et d'analyse (36), aux moyens de stockage de données (24), aux moyens de communication de données (26) et autonomes comme des batteries électriques ou moyennant des moyens de récupération d'énergie soit sont au moins pour partie communs à plusieurs appareils de mesure et de collecte (20), aux moyens de calcul et d'analyse (36), aux moyens de stockage de données (24), aux moyens de communication de données (26) soit sont au moins pour partie communs aux moyens d'alimentation électrique de l'engin.

6. Système de diagnostic (10) selon l'une quelconque des revendications 1 à 5, dans lequel les appareils de mesure et de collecte (20), et/ou les moyens de calcul et d'analyse (36), et/ou les moyens de stockage de données (24), et/ou les moyens de communication (26) et/ou les moyens d'alimentation électrique (28) sont au moins pour partie localisés vers les unités de roulement (12), les essieux (15a) ou les boggies (15b), et en particulier sont localisés vers la périphérie de l'engin (16), et en particulier au moins pour partie placés dans un boîtier propre (22), fixé à l'engin (16), en particulier de façon amovible ou rapporté.

7. Système de diagnostic (10) selon l'une quelconque des revendications 1 à 6, dans lequel une unité de recueil de données (30) soit est fixe soit est déplaçable, en particulier transportable, plus spécialement portable en tout ou partie tel qu'une partie portative de mesure et une partie formant console d'accueil.

8. Système de diagnostic (10) selon l'une quelconque des revendications 1 à 7, dans lequel en position de recueil une unité de recueil (30) est disposée le long d'une voie (18) du réseau, d'un côté ou des deux côtés de ladite voie (18), en particulier en vis-à-vis, ou dans la région où plusieurs voies (18) du réseau sont structurellement proches les unes des autres.

9. Système de diagnostic (10) selon l'une quelconque des revendications 1 à 7, qui soit comprend une unique unité de recueil (30) pour la totalité du réseau de voies (18) soit comprend une pluralité d'unités de recueil (30), en particulier une pluralité d'unités de recueil (30) réparties par rapport au réseau de voies (18), et plus spécialement réparties au moins grosso modo régulièrement.

10. Système de diagnostic (10) selon l'une quelconque des revendications 1 à 9, dans lequel une unité de recueil (30) est associée à une voie (18) où en situation normale l'engin (16) soit roule soit est à l'arrêt, le diagnostic étant effectué, respectivement, pour un engin (16) roulant ou un engin (16) à l'arrèt.

11. Système de diagnostic (10) selon l'une quelconque des revendications 1 à 10, qui, pour une unité de roulement (12), comprend soit un unique appareil de mesure et de collecte (20) soit au moins deux appareils de mesure et de collecte (20) montés en parallèle, en particulier un appareil de mesure et de collecte (20) de haute résolution et un appareil de mesure et de collecte (20) de basse consommation électrique, en particulier de basse résolution.

12. Système de diagnostic (10) selon l'une quelconque des revendications 1 à 11, qui comprend des moyens de stockage de données (24) actifs pendant une période de temps qui soit correspond à la période de temps entre deux recueils successifs de données par une unité de recueil (30) soit correspond à une durée préfixée fixée par l'opérateur mettant en oeuvre le système de diagnostic (10), les moyens de stockage (24) étant vidés des données préalablement stockées à l'issue de la période de temps et qui comprend également des moyens de stockage permanent de données.

13. Système de diagnostic (10) selon l'une quelconque des revendications 1 à 12, comprenant en outre au moins une mémoire de stockage (40) desdites informations de diagnostic embarquée sur l'engin (16) et/ou dissociée structurellement - et pouvant être le cas échéant distante - du réseau de voies (18) et de l'engin (16).

14. Système de diagnostic (10) selon l'une quelconque des revendications 1 à 13, dans lequel les moyens de calcul et d'analyse (36) sont programmés de manière, à partir des données caractéristiques des conditions de roulage des unités de roulement (12), à mettre en oeuvre tout ou partie d'un procédé de détection d'une anomalie structurelle des unités de roulement (12), et/ou à mettre en oeuvre un procédé de prédiction qu'une unité de roulement (12) devrait atteindre un seuil significatif de l'état structurel considéré après une certaine rotation, selon une loi d'évolution du paramètre des conditions de roulage de l'unité de roulement (12) en fonction de la rotation de celle-ci.

15. Système de diagnostic (10) selon l'une quelconque des revendications 1 à 14, qui comporte, en outre, des moyens d'expression visuelle et/ou sonore embarqués sur l'engin (16), associés fonctionnellement aux moyens de calcul et d'analyse (36) et aptes à recevoir d'eux une information de diagnostic de l'état structurel présent ou prévisionnel de chacune des unités de roulement (12), en particulier une information de diagnostic critique.

16. Système de diagnostic (10) selon l'une quelconque des revendications 1 à 15, dans lequel l'état structurel présent ou prévisionnel diagnostiqué est une altération de l'unité de roulement (12), tel qu'un écaillage ou analogue, en particulier la présence ou non d'une telle altération, et/ou le degré d'importance d'une telle altération, ou une altération de la cage du roulement.

17. Système de diagnostic (10) selon l'une quelconque des revendications 1 à 16, dans lequel le paramètre des conditions de roulage d'une unité de roulement (12) caractéristique de son état structurel est la vitesse instantanée de rotation de l'unité de roulement, les appareils de mesure et de collecte (20) étant des capteurs de vitesse de rotation instantanée aptes à mesurer la vitesse de rotation instantanée d'une unité de roulement (12).

18. Engin à roues (16) ayant une pluralité d'unités de roulement (12) pour son déplacement sur un réseau de voies et, le cas échéant, plusieurs essieux (15a) ou boggies (15b), tel qu'un engin tracté, en particulier un train, ou un engin mobile ou automobile, avec des unités de roulements décentralisées et distantes, sur lequel est embarqué et monté un sous-système (20 + 36 + 24 + 26 + 28) spécialement destiné à faire partie d'un système de diagnostic (10) selon l'une quelconque des revendications 1 à 17, en étant embarqué et monté sur l'engin à roues (16) de sorte à être associé à une unité de roulement (12) ou à un essieu (15a) ou à un boggie (15b), qui comprend un appareil de mesure et de collecte (20) et, le cas échéant, un moyen de traitement, un moyen de calcul et d'analyse (36), un moyen de stockage de données (24), un moyen de communication de données (26) par liaison sans fil dans une certaine zone de couverture, un moyen d'alimentation électrique (28) des moyens du sous-système, et entre les moyens du sous-système, des liaisons non filaires ou des liaisons filaires (36a, 24a, 26a) ayant chacune une longueur inférieure à la moitié, plus particulièrement inférieure au tiers, plus particulièrement encore inférieure au quart, de la distance la plus grande séparant deux unités de roulement (12), en particulier inférieure à 2 mètres, dans lequel les appareils de mesure et de collecte (20), les moyens de calcul et d'analyse (36), les moyens de stockage de données (24) et les moyens de communication de données (26) sont décentralisés et distants les uns des autres, alors que les liaisons non filaires ou les liaisons filaires (36a, 24a, 26a) ont chacune une longueur inférieure à la moitié, plus particulièrement inférieure au tiers, plus particulièrement encore inférieure au quart, de la distance la plus grande séparant deux unités de roulement (12), en particulier inférieure à 2 mètres, alors que, le cas échéant, les appareils de mesure et de collecte (20) avec les moyens de traitement, les moyens de stockage de données (24), les moyens de calcul et d'analyse (36), les moyens de communication de données (26), les moyens d'alimentation électrique (28) des moyens du sous-système, et les liaisons non filaires ou filaires soit sont intégrés à l'engin (16) en première monte soit sont montés sur l'engin (16) postérieurement à sa réalisation.

19. Procédé de mise en oeuvre du système de diagnostic (10) selon l'une quelconque des revendications 1 à 17, dans lequel :
■ moyennant la mise en oeuvre des appareils de mesure et de collecte (20) et le cas échéant des moyens de traitement, on mesure et on collecte dans le temps la valeur d'au moins un paramètre des conditions de roulage des unités de roulement (12), caractéristique de leur état structurel et on fournit des données caractéristiques des conditions de roulage de chacune des unités de roulement (12),
■ moyennant la mise en oeuvre des moyens de calcul et d'analyse (36), à partir desdites données caractéristiques et d'au moins une valeur significative prédéterminée du - ou fonction du - paramètre caractéristique, on fournit une information de diagnostic de l'état structurel présent ou prévisionnel de chacune des unités de roulement (12) implantées sur l'engin (16),
■ moyennant la mise en oeuvre des moyens de stockage de données (24), on stocke lesdites informations de diagnostic et les données d'identification,
■ moyennant la mise en oeuvre des moyens de communication de données (26) et de l'unité de recueil (30), on transfère lesdites informations de diagnostic et les données d'identification stockées à l'unité de recueil de données (30), alors que l'unité de recueil (30) est positionnée structurellement dans la zone de couverture des moyens de communication (26).
